(19)

Europäisches
Patentamt
European
Patent Office
Office européen
des brevets

(11) **EP 3 249 897 A1**

(12) **EUROPEAN PATENT APPLICATION**
published in accordance with Art. 153(4) EPC

(43) Date of publication:
**29.11.2017 Bulletin 2017/48**

(21) Application number: **16739748.8**

(22) Date of filing: **14.01.2016**

(51) Int Cl.:
**H04M 1/02** *(2006.01)*      **G06F 1/16** *(2006.01)*

(86) International application number:
**PCT/CN2016/070880**

(87) International publication number:
**WO 2016/116001 (28.07.2016 Gazette 2016/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **23.01.2015 CN 201510036188**

(71) Applicants:
• **Zhejiang Geely Holding Group Co., Ltd.
Zhejiang 310051 (CN)**

• **Zhejiang Geely Automobile
Research Institute Co., Ltd.
Taizhou, Zhejiang 317000 (CN)**

(72) Inventor: **LI, Shufu
Hangzhou
Zhejiang 310051 (CN)**

(74) Representative: **2K Patentanwälte Blasberg
Kewitz & Reichel
Partnerschaft mbB
Schumannstrasse 27
60325 Frankfurt am Main (DE)**

(54) **DISPLAY SCREEN, MOBILE TERMINAL, AND COMBINED TERMINAL EQUIPMENT**

(57)      The invention relates to the field of terminal devices, and in particular, to a display screen for a mobile terminal, a mobile terminal having the display screen and a combined terminal device formed by combining a plurality of mobile terminals. For the display screen for a mobile terminal, the display screen is basically rectangular and arranged such that L:W≥2.5, and thus with the same display area, the display screen of the invention has a smaller width, and it is convenient to operate it with one hand. The combined terminal device is formed by splicing a plurality of mobile terminals; it may be such that by splicing a suitable number of mobile terminals and by setting the length and width of the mobile terminal, the display screen of the combined terminal device happens to basically have the ratio of a sheet of A4 paper, thus substantially eliminating the problem of black borders appearing when displaying a published document. The invention solves the problem that a display screen/mobile terminal can not be operated with one hand due to its too large width, and at the same time, can also solve the problem of black borders appearing when displaying a published document, when a plurality of mobile terminals are combined.

FIG. 5

**Description**

FIELD OF THE INVENTION

The invention relates to a mobile terminal, and in particular, to a display screen for a mobile terminal, a mobile terminal having the display screen and a combined terminal device formed by combining a plurality of mobile terminals.

BACKGROUND OF THE INVENTION

In the prior art, the aspect ratio of the display screen of a mobile phone is generally locked to be 16:9 or 16:10. To be able to implement a one-hand touch operation on a display screen as much as possible, the area of the display screen at this point is generally very small, for example, the display screen is of 3.5 inches, which is far from meeting people's demand for large display area. However, when the display area of a display screen is arranged to be sufficiently large, for example, a display screen of 5.5 inches, at this point, due to the above mentioned limitation of the aspect ratio, the width of the display screen is too large, for which a one-hand operation can already not be performed generally.

Moreover, for a display screen designed according to the aforementioned aspect ratio, when it displays published documents mostly of the size of a sheet of A4 paper, black borders will generally be left at the periphery of the display screen, which not only affects the display effect, but also does not realize the maximum utilization of the display screen.

In addition, since the update and upgrade of mobile phones is very fast, the frequency at which a user of a mobile phone changes the mobile phone is also faster and faster. Discard of old mobile phones will cause serious waste of resources and environmental pollution. Nowadays, there are yet no good solutions on the market, and the approach of recycling mobile phones is generally adopted. Thus, not only will the cost of regeneration of worn-out mobile phones become high, but also secondary pollution in recycling and regeneration will result.

SUMMARY OF THE INVENTION

Upon recognizing the above described prior art, the inventor of this application occasionally realizes that by designing a specific aspect ratio of a display screen, the above mentioned several problems existing in the prior art which look irrelevant to each other may be solved in a unified way.

According to an aspect of the invention, there is provided a display screen for a mobile terminal, wherein the display screen is basically rectangular and arranged such that $L:W \geq 2.5$, wherein L is the length of the display screen and W is the width of the display screen.

Further, $L:W=(205\sim215):[(290\sim304)/n]$, wherein n is a positive integer and $n \geq 4$.

Further, $n \leq 6$.

Further, n is 4 or 5.

Further, $150mm \geq W \geq 30mm$, and optionally, $90mm \geq W \geq 50mm$.

Further, L is 205-215mm.

Further, W is 58~61mm. Still further, W is 60mm, and L is 210mm.

Further, W is 72~76mm. Still further, W is 74mm, and L is 210mm.

The invention further provides a display screen for a mobile terminal, wherein the display screen is basically rectangular and arranged such that $L:W=(205\sim215):[(290\sim304)/n]$, wherein L is the length of the display screen, W is the width of the display screen, and n is a positive integer and $n \geq 2$.

Further, n is 2 or 3.

Further, L is 205~215mm.

According to another aspect of the invention, there is provided a mobile terminal comprising a display screen as described in one of the above technical solutions, wherein in the width direction of the display screen, two oppositely arranged sides of the mobile terminal are arranged in a form of no bezel or a narrow bezel, wherein the width of the narrow bezel is less than 1mm.

Further, in the length direction of the display screen, at least one of two oppositely arranged sides of the mobile terminal is arranged in the form of no bezel or a narrow bezel.

Further, the mobile terminal is a mobile phone.

According to still another aspect of the invention, there is provided a combined terminal device which is formed by splicing N identical mobile terminals according to one of the above technical solutions in the width direction of the display screen, and is such that the display screens of the N mobile terminals form a single rectangular screen as a whole.

Further, the value of N is the same as n.

At the same time, the invention provides another display screen for a mobile terminal, wherein the display screen is basically rectangular and at least one of its length or width is 205~215mm.

Meanwhile, the invention provides another combined terminal device which is formed by splicing a plurality of mobile terminals in a signal row, wherein a plurality of display screens corresponding to the plurality of mobile terminals are basically rectangular and have lengths or widths of the same size, such that the plurality of mobile terminals form a single rectangular screen as a whole after spliced along the lengths or widths of the same size, the lengths or widths of the same size are 205~215mm and are taken as the width of the single rectangular screen, and the length of the single rectangular screen is 290~304mm.

It can be seen from the above description of the technical solutions of the invention that, as compared to a display screen in the prior art of a display ratio of 16:9 or 16:10 (i.e., an aspect ratio of 1.78 or 1.6), the invention sets the aspect ratio of a display screen to be at least 2.5. Therefore, the display screen of the invention is more elongated in shape. Thus, with the same width, the display screen of the invention has a larger display area. Or, in other words, with the same display area, the display screen of the invention may have a smaller width to facilitate a one-hand operation by people.

Moreover, by significantly elongating a display screen as compared to the prior art, it may be surprisingly found that, while for such a display screen, it is easy for a user of a mobile phone to operate by one hand, a corresponding ratio of a sheet of A4 paper is easier to realize by a plurality of display screens in a single row splicing manner, though the invention is not limited to single row splicing. What's more, it may be conceived that when a certain user retains a plurality of mobile phones with such a display screen due to the update and upgrade of mobile phones, he may splice these mobile phones to form a combined terminal device.

It may be appreciated that when a mobile phone with a display screen according to the invention is eliminated by a user, it may be due to other causes unrelated to the display screen, for example, the CPU or lack of storage space. Yet, such a display screen with a specific aspect ratio proposed by the invention just provides a corresponding use value for an old mobile phone that is eliminated, because when a plurality of mobile phones including the old mobile phone are spliced into a combined terminal device, what is primarily made use of by it is the display function of the display screen of the old mobile phone, and other capabilities of the combined terminal device may be provided by a new mobile phone with better performances in the combined terminal device.

In particular, a primary function of a display screen is to provide document reading for a user, and when a suitable number of mobile terminals are spliced, such that the display screen of a combined terminal device is substantially of the ratio of a sheet of A4 paper, the problem of black borders appearing when displaying a published document with the A4 ratio may be substantially eliminated. This is convenient for a user to read a document with the A4 ratio on the spliced display screens, and is more significant for promotion of the use value of an old mobile phone.

The above and other objectives, advantages and features of the invention may be more apparent to those skilled in the art from the following detailed description of specific embodiments of the invention in connection with the drawings.

BRIEF DESCRIPTION OF THE DRAWINGS

In the following, some specific embodiments of the invention will be described in detail with reference to the drawings in an exemplary and non-limiting manner. In the drawings, like reference signs denote like or similar components or parts. It shall be appreciated by those skilled in the art that these drawings are not necessarily drawn to scale. In the drawings:

Fig. 1 is a schematic diagram of a combined terminal device according to an embodiment of the invention, wherein the number of mobile terminals is 2, and two sides of the mobile terminals have no bezel, and both of the mobile terminals are tablets;

Fig. 2 is a schematic diagram of a combined terminal device according to an embodiment of the invention, wherein the number of mobile terminals is 3, and two sides of the mobile terminals have no bezel, and the mobile terminals are all mobile phones;

Fig. 3 is a schematic diagram of a combined terminal device according to an embodiment of the invention, wherein the number of mobile terminals is 3, and two sides of the mobile terminals have no bezel, and the combined terminal device is composed of two tablets and one mobile phone;

Fig. 4 is a schematic diagram of a combined terminal device according to an embodiment of the invention, wherein the number of mobile terminals is 2, and two sides of the mobile terminals have no bezel, and the combined terminal device is composed of one tablet and one mobile phone;

Fig. 5 is a schematic diagram of a combined terminal device according to an embodiment of the invention, wherein the number of mobile terminals is 5, and two sides of the mobile terminals have no bezel;

Fig. 6 is a schematic diagram of a combined terminal device according to another embodiment of the invention, wherein the number of mobile terminals is 4, and two sides of the mobile terminals have no bezel;

Fig. 7 is a schematic diagram of a combined terminal device according to still another embodiment of the invention, wherein the number of mobile terminals is 4, and three sides of the mobile terminals have no bezel;

Fig. 8 is a schematic diagram of a mobile terminal in Fig. 6, wherein two sides of the mobile terminal have no bezel; and
Fig. 9 is a schematic diagram of a mobile terminal in Fig. 7, wherein three sides of the mobile terminal have no bezel.

DETAILED DESCRIPTION OF THE INVENTION

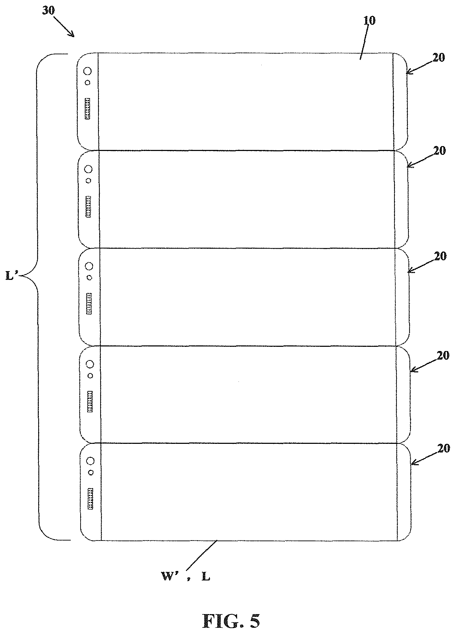

As shown in Fig. 5, a combined terminal device 30 provided by the invention is formed by splicing five mobile terminals 20 along the width direction of a display screen 10, and when splicing, the individual mobile terminals 20 are aligned, such that the length L of the display screen 10 acts as the width W' of the combined terminal device. In Fig. 5, the mobile terminals 20 are mobile phones, and in other embodiments, the mobile terminals 20 may also be tablets.

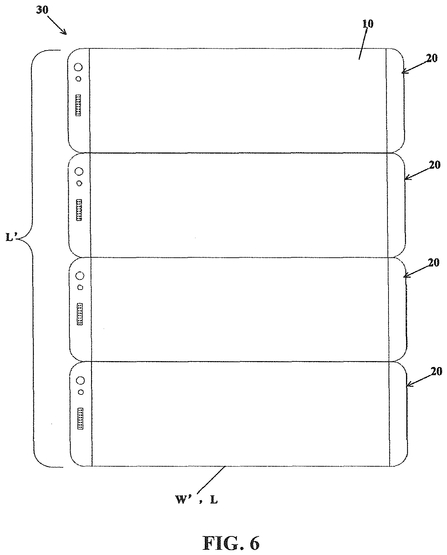

Fig. 6 is a schematic diagram of a combined terminal device according to another embodiment of the invention. The combined terminal device 30 in Fig. 6 is formed by splicing four mobile terminals 20. The two long sides of the mobile terminals 20 in Fig. 6 are of a no bezel design.

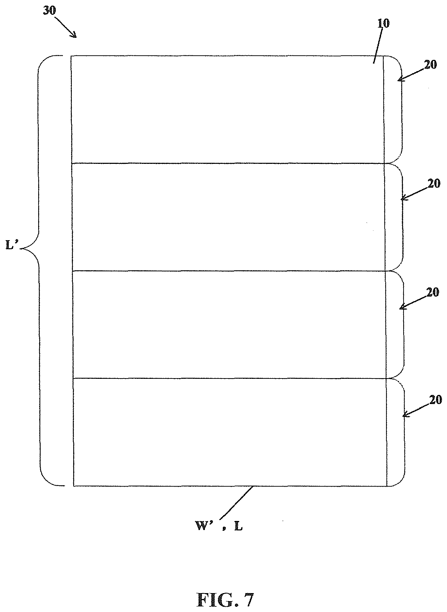

Fig. 7 is a schematic diagram of a combined terminal device according to still another embodiment of the invention. The combined terminal device 30 in Fig. 7 is also formed by splicing four mobile terminals 20. The two long sides and one short side of the mobile terminals 20 in Fig. 7 are of a no bezel design.

In Figs. 5, 6 and 7, the lengths L' and the widths W' of the combined terminal devices are all 297mm and 210mm, respectively. That is, the width W of a mobile terminal 20 in Fig. 5 is 59.4mm, the length L is 210mm, and L:W=3.5; the width W of a mobile terminal 20 in Fig. 6 is 74.25mm, the length L is 210mm, and L:W=2.8; and the width W of a mobile terminal 20 in Fig. 7 is also 74.25mm, the length L is also 210mm, and L:W=2.8. When a published document is displayed by the combined terminal devices in Figs. 5-7, not only can it be displayed without black borders on a full screen, but also the size of the font is exactly the same as that of the publication paper font at this point.

The combined terminal devices in Figs. 5-7 may also be formed by using mobile terminals of a narrow bezel and splicing them along the width direction of the display screen. For example, here, a bezel may be defined as a narrow bezel, of which the width is less than 1mm, and of course, the width of the bezel may further be defined as needed. According to the concept of the invention, the invention preferably uses mobile terminals 20 as shown in Fig. 5 and Fig. 6 in which two sides in the width direction of the display screen are designed with no bezel, which at this point can cause substantially no influence on reading at splicing positions of individual mobile terminals 20. However, with the increase of the widths of two sides in the width direction of the display screens, adverse influence on reading will be generated gradually.

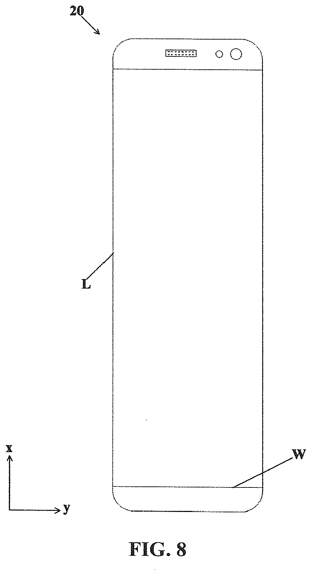

Fig. 8 is a schematic diagram of a mobile terminal in Fig. 6. The mobile terminal 20 as shown in Fig. 8 has a display screen 10, and in the width direction of the display screen, two oppositely arranged sides of the mobile terminal 20 are arranged in a form of no bezel. In Fig. 8, the x direction is the length direction of the display screen, and the y direction is the width direction of the display screen.

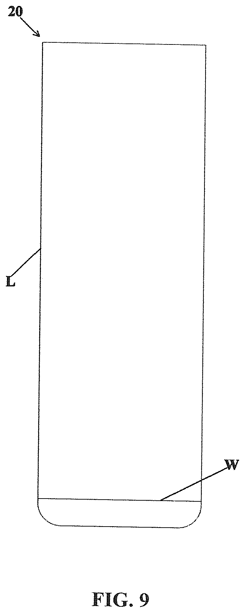

Fig. 9 is a schematic diagram of a mobile terminal in Fig. 7. The mobile terminal 20 as shown in Fig. 9 has a display screen 10, and in the width direction of the display screen, two oppositely arranged sides (long sides) and the upper width side (short side) of the mobile terminal 20 are arranged in a form of no bezel. At this point, the originally arranged camera, microphone, light sensor located on the upper width side (short side) may be designed into other positions of the mobile terminal 20 as needed, for example, into the back or an area where the lower width side (short side) intersects the screen. Of course, in other embodiments, the lower width side (short side) may further be arranged in a form of no bezel, and at this point, the originally arranged camera, microphone, light sensor located on the upper width side (short side) remain intact.

In the following, a display screen 10 of a mobile terminal 20 of this application will be described in particular.

The display screen 10 is used on a mobile terminal 20. It can be seen from Figs. 5-9 that the display screen 10 is basically rectangular and arranged such that L:W≥2.5, wherein L is the length of the display screen and W is the width of the display screen. Therefore, the display screen 10 of the invention is more elongated in shape. Thus, with the same width, the display screen 10 of the invention has a larger display area. Or, in other words, with the same display area, the display screen 10 of the invention may have a smaller width to facilitate a one-hand operation by people. Moreover, while it is easy for a user of a mobile phone to operate by one hand, a corresponding ratio of a sheet of A4 paper is easier to realize by a plurality of display screens in a single row splicing manner.

According to an embodiment of the invention, the aspect ratio of the rectangular display screen may be restricted to

$$L:W=(205\sim215):[(290\sim304)/n], \qquad\qquad (1)$$

wherein n is a positive integer and n≥2. By such an arrangement, when a combined terminal device 30 is formed by splicing n mobile terminals 20, the aspect ratio of the combined terminal device 30 is (290~304)/(205~215), that is to say, the aspect ratio of the display area of the combined terminal device 30 formed by splicing mobile terminals 20 is substantially equal to 297:210, such that the display screen 10 can display a published document without black borders on a full screen regardless of the size of the font.

In a preferred embodiment of the invention, n is set to be less than or equal to 6. And when n takes a value of 4 or 5, not only can the display screen 10 be made to have a relatively large display area, but also the display screen 10 is not made to be too elongated so as to affect the use of the mobile terminal 20.

In a preferred embodiment of the invention, W is 58~61mm, and L is 205~215mm, and especially when W is 60mm and L is 210mm, five mobile terminals 20 may constitute a combined terminal device 30, of which the aspect ratio is substantially 297:210. When W is 72~76mm and L is 205~215mm, especially when W is 74mm and L is 210mm, four mobile terminals 20 may constitute a combined terminal device 30, of which the aspect ratio is substantially 297:210.

While having a relatively large display area, the display screen 10 and the mobile terminal 20 according to the invention is further particularly suitable for one-hand operations. And for a combined terminal device 30 formed by splicing a plurality of the mobile terminals 20, its aspect ratio is substantially equal to 297:210, and thereby it can display a published document without black borders on a full screen.

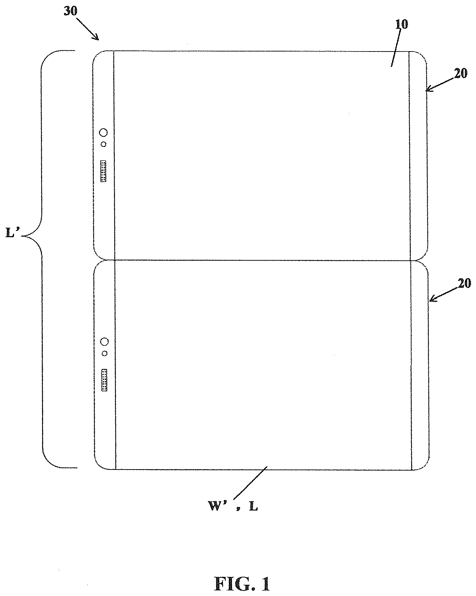

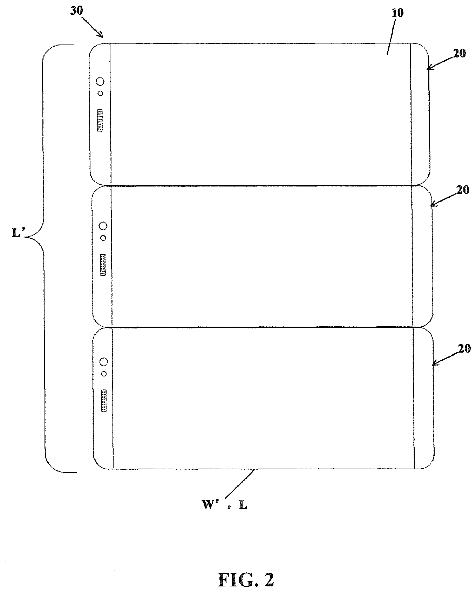

It needs to be understood that the restriction condition for the aspect ratio of the display screen of a mobile terminal described above in the formula (1) may not be limited to a relatively elongated display screen (e.g., a display screen of which the aspect ratio is not less than 2.5), but may act as an independent restriction condition. For example, for the formula (1), n therein may take a value of 2 or 3, as shown in Figs. 1-2. At this point, the aspect ratio is roughly 1.41 and 2.12, respectively. Although at this point a single display screen does not look so elongated, it is still in favor of being spliced into a display screen of the ratio of a sheet of A4 paper. Especially, when two or three such display screens are used to be spliced into a display screen of a size substantially the same as the actual size of a sheet of A4 paper, the length L of the display screen may be 205-215mm.

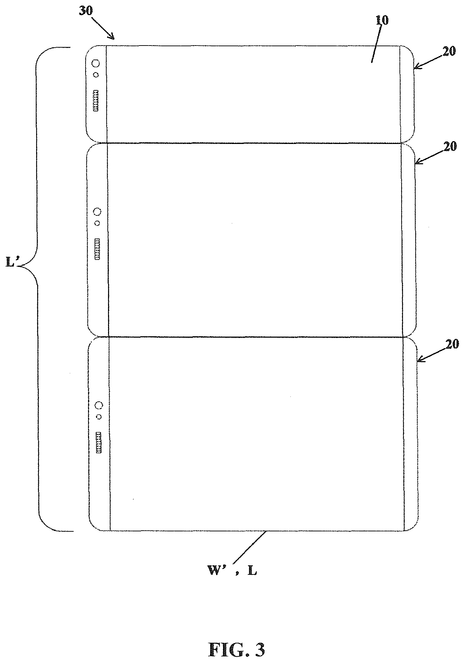

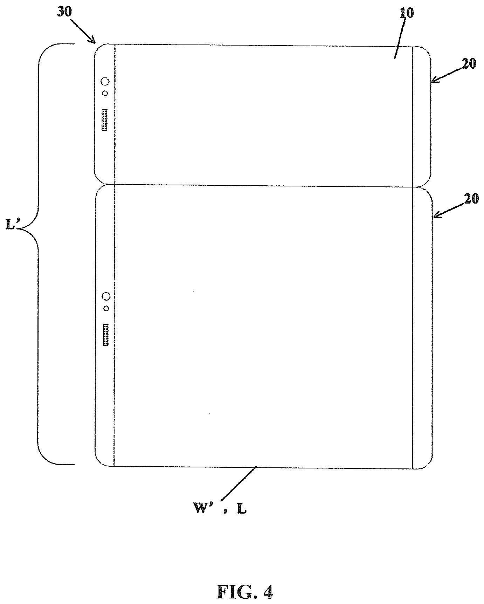

Further, it needs to be understood that, purely for the convenience of being spliced into a display screen of a size substantially the same as the actual size of a sheet of A4 paper, the display screens of the mobile terminals may be rectangular, and the lengths or widths thereof are 205-215mm. When a combined terminal device 30 is formed by splicing a plurality of mobile terminals in a single row, the lengths or widths of these mobile terminals have the same size and take a value between 205~215mm. Thus, when these mobile terminals are aligned and spliced along the lengths or widths of the same size, the formed single rectangular screen has a width of 205~215mm on the whole. The length of the single rectangular screen formed by splicing may be 290~304mm, which may be achieved by selecting the number of mobile terminals that participate in splicing, or by selecting the length of another side of the mobile terminal of a different size. Typically, the combined terminal device 30 may be formed by combining a mobile phone and a tablet as in Fig. 4, or formed by combining a mobile phone and two tablets as in Fig. 3.

So far, it shall be recognized by those skilled in the art that although multiple exemplary embodiments of the invention have already been illustrated and described in detail in this context, many other variations or modifications in line with the principles of the invention may still be directly determined or deduced according to the content disclosed in the invention, without departing from the spirit and scope of the invention. Therefore, the scope of the invention should be understood and deemed to cover all the other variations or modifications.

**Claims**

1. A display screen for a mobile terminal, wherein the display screen is basically rectangular and arranged such that L:W≥2.5, wherein L is the length of the display screen and W is the width of the display screen.

2. The display screen as claimed in claim 1, wherein L:W=(205~215):[(290~304)/n], wherein n is a positive integer and n≥4.

3. The display screen as claimed in claim 2, wherein n≤6.

4. The display screen as claimed in claim 2, wherein n is 4 or 5.

5. The display screen as claimed in any of claims 1-4, wherein 150mm≥W≥30mm, and optionally, 90mm≥W≥50mm.

6. The display screen as claimed in one of claims 2-4, wherein L is 205~215mm.

7. The display screen as claimed in claim 6, wherein W is 58~61mm, and optionally, W is 60mm, and L is 210mm.

8. The display screen as claimed in claim 6, wherein W is 72~76mm, and optionally, W is 74mm, and L is 210mm.

9. A display screen for a mobile terminal, wherein the display screen is basically rectangular and arranged such that L:W=(205~215):[(290~304)/n], wherein L is the length of the display screen, W is the width of the display screen, and n is a positive integer and n≥2.

10. The display screen as claimed in claim 9, wherein n is 2 or 3.

11. The display screen as claimed in one of claims 9-10, wherein L is 205~215mm.

12. A mobile terminal comprising a display screen as claimed in one of claims 1-1 l, wherein in the width direction of the display screen, two oppositely arranged sides of the mobile terminal are arranged in a form of no bezel or a narrow bezel, wherein the width of the narrow bezel is less than 1mm.

13. The mobile terminal as claimed in claim 12, wherein in the length direction of the display screen, at least one of two oppositely arranged sides of the mobile terminal is arranged in the form of no bezel or a narrow bezel.

14. The mobile terminal as claimed in claim 12, wherein the mobile terminal is a mobile phone or a tablet.

15. A combined terminal device, which is formed by splicing N identical mobile terminals as claimed in one of claims 12-14 in the width direction of the display screen, and is such that the display screens of the N mobile terminals form a single rectangular screen as a whole.

16. The combined terminal device as claimed in claim 15, wherein the value of N is the same as n.

17. A display screen for a mobile terminal, wherein the display screen is basically rectangular and at least one of its length or width is 205-215mm.

18. A combined terminal device, which is formed by splicing a plurality of mobile terminals in a signal row, wherein a plurality of display screens corresponding to the plurality of mobile terminals are basically rectangular and have lengths or widths of the same size, such that the plurality of mobile terminals form a single rectangular screen as a whole after spliced along the lengths or widths of the same size, the lengths or widths of the same size are 205~215mm and are taken as the width of the single rectangular screen, and the length of the single rectangular screen is 290~304mm.

**FIG. 1**

**FIG. 2**

FIG. 3

FIG. 4

FIG. 5

**FIG. 6**

30

10

20

20

20

20

L'

W' , L

FIG. 7

**FIG. 8**

**FIG. 9**

# EP 3 249 897 A1

## INTERNATIONAL SEARCH REPORT

| International application No. |
|---|
| **PCT/CN2016/070880** |

### A. CLASSIFICATION OF SUBJECT MATTER

H04M 1/02 (2006.01) i; G06F 1/16 (2006.01) i

According to International Patent Classification (IPC) or to both national classification and IPC

### B. FIELDS SEARCHED

Minimum documentation searched (classification system followed by classification symbols)

H04M 1/+; G06F 1/+

Documentation searched other than minimum documentation to the extent that such documents are included in the fields searched

Electronic data base consulted during the international search (name of data base and, where practicable, search terms used)

CNPAT, CPRS, CNKI, WPI, EPODOC: tablet computer, notebook, ratio, mobile, cellphone, length, width, hight, aspect w ratio

### C. DOCUMENTS CONSIDERED TO BE RELEVANT

| Category* | Citation of document, with indication, where appropriate, of the relevant passages | Relevant to claim No. |
|---|---|---|
| X | MANGOFISH. "Samsung Applies for a Patent for a Cellphone Equipped with a 21:9 Ultra-Long Screen", TENCENT DIGITAL, 16 March 2014 (16.03.2014), pages 1-2 | 1-11, 17 |
| Y | MANGOFISH. "Samsung Applies for a Patent for a Cellphone Equipped with a 21:9 Ultra-Long Screen", TENCENT DIGITAL, 16 March 2014 (16.03.2014), pages 1-2 | 12-16, 18 |
| Y | CN 201550146 U (HUAWEI DEVICE CO., LTD.), 11 August 2010 (11.08.2010), description, paragraphs 31-41, and figure 3 | 12-16, 18 |
| PX | CN 104714613 A (ZHEJIANG GEELY AUTOMOBILE HOLDINGS LIMITED et al.), 17 June 2015 (17.06.2015), description, paragraphs 5-55, and figures 1-9 | 1-18 |
| A | CN 102375487 A (BEIJING SAMSUNG COMMUNICATION TECHNOLOGY RESEARCH INSTITUTE et al.), 14 March 2012 (14.03.2012), the whole document | 1-18 |
| A | US 5963268 A (SAMSUNG ELECTRONICS CO., LTD.), 05 October 1999 (05.10.1999), the whole document | 1-18 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 March 2016 (03.03.2016) | **19 April 2016 (19.04.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **JIA, Yan** Telephone No.: (86-10) **62414225** |
|---|---|

Form PCT/ISA/210 (second sheet) (July 2009)

**INTERNATIONAL SEARCH REPORT**
Information on patent family members

International application No.

**PCT/CN2016/070880**

| Patent Documents referred in the Report | Publication Date | Patent Family | Publication Date |
|---|---|---|---|
| CN 201550146 U | 11 August 2010 | None | |
| CN 104714613 A | 14 March 2012 | None | |
| CN 102375487 A | 14 March 2012 | None | |
| US 5963268 A | 05 October 1999 | KR 0144941 B1 | 24 April 1998 |

Form PCT/ISA/210 (patent family annex) (July 2009)